# EUROPEAN PATENT APPLICATION

(11) **EP 1 055 959 A2**
(43) Date of publication of application: **29.11.2000**
(21) Application number: 00110715.0
(22) Date of filing: 19.05.2000
(51) Int. Cl.: G02F 1/09

(54) **Temperature dependent variable optical attenuator**

(30) Priority: 21.05.1999 JP 14115499
(71) Applicant: NEC CORPORATION, Tokyo (JP)
(72) Inventor: Iwano, Tadayuki, Tokyo (JP)
(74) Representative: VOSSIUS & PARTNER

(57) **Abstract**

A variable optical attenuator and an optical power level adjusting method used this variable optical attenuator, which has high reliability and a wide dynamic range, are provided. The variable optical attenuator consists of an optical filter and a temperature control circuit. And the optical filter provides a dielectric multi-layer film and an optical isolator. The dielectric multi-layer film changes its transmitting characteristic of light by the change of temperature. The optical isolator absorbs or removes returned light reflected from the dielectric multi-layer film. The temperature control circuit controls the temperature of the dielectric multi-layer film. The variable optical attenuator controls the transmitting characteristic of light of the dielectric multi-layer film by using the temperature control circuit. And the variable optical attenuator adjusts the power level of the optical signal of each wavelength transmitting between the WDM communication systems to a desiring level at the attenuating region in which the transmitting amount of the dielectric multi-layer film becomes small gradually.

## Description

The present invention relates to a variable optical attenuator and an optical power level adjusting method used this attenuator, in particular, which are used at an optical add-drop multiplexing (ADM) repeater site in an optical wavelength division multiplexing (WDM) communication system.

At an optical WDM communication system, when power level differences occur among optical signals to be multiplexed, these differences become a cause to deteriorate the quality of the optical signals, as a result, it is necessary to adjust power levels of the optical signals. Therefore, a variable optical attenuator is used as a means for adjusting the power levels of optical signals inputted to an optical signal receiving circuit at the optical communication system. As conventional variable optical attenuators, several methods are used to adjust the power levels of the inputted optical signals, such as a mechanical power level adjusting method which adjusts an attenuating amount of each optical signal, and a method which adjusts refractive indexes by using an electro-optical effect or a thermo-optical effect.

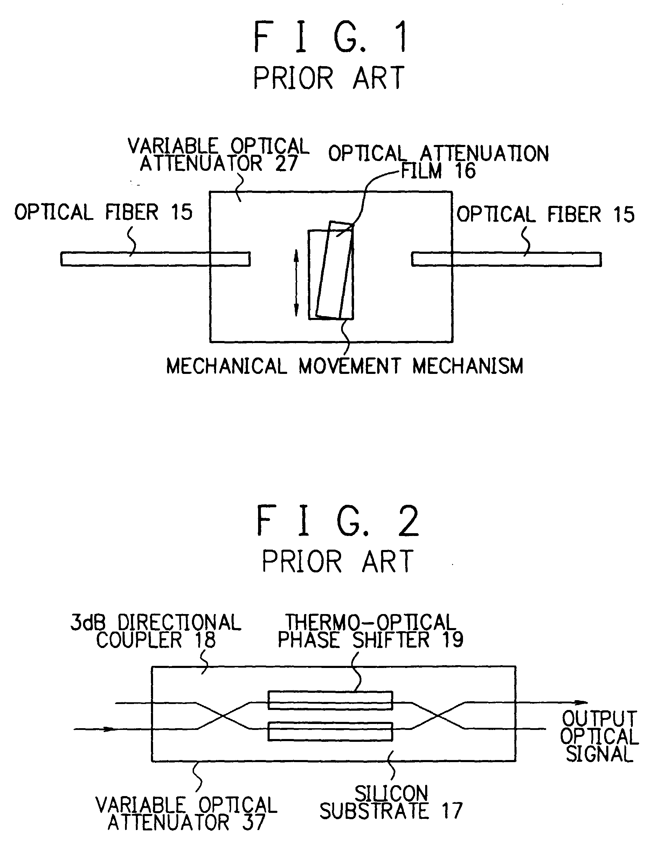

Fig. 1 is a diagram showing a structure of a conventional variable optical attenuator used a mechanical method. This variable optical attenuator 27 shows a method that adjusts an attenuating amount of each optical signal by using a mechanical method. Referring to Fig. 1, this method is explained. In this method, an optical attenuation film 16, which is an adjusting means for adjusting optical power levels and is made so that an attenuating amount changes continuously, is moved by a mechanical movement. And an optical signal, which is made to be a parallel beam by emitting to space from an optical fiber 15, is inputted to a designated position of the optical attenuation film 16. With this movement, the attenuating amount of the optical signal is adjusted. This method is used at the case that the size of device has not any limit as a simple and convenient method.

And Japanese Patent Application Laid-Open No. HEI 6-186513 discloses a variable optical attenuator. This variable optical attenuator uses an electro-optical effect without using a mechanical movement. In this method, a waveguide having plural curving parts is formed on a substrate having an electro-optical effect and an electric field is applied to electrodes positioned at the outside of the curving parts of the waveguide. With this operation, refractive indexes of the curving parts of the waveguide are controlled, and an optical power level emitted from the waveguide is adjusted. As a result, the attenuating amount of the optical signal is adjusted.

Fig. 2 is a diagram showing a structure of a conventional variable optical attenuator used a thermo-optical effect. As shown in Fig. 2, at this method, a Mach-Zehnder interferometer structure and a thermo-optical phase shifter 19 are formed on a silicon substrate 17. In this method, an optical signal inputted to a 3dB directional coupler 18 is split into two optical signals, and the split optical signals are attenuated to designated values by using the thermo-optical effect of the thermo-optical phase shifter 19. After this, these optical signals are combined again and outputted as an output optical signal.

However, at the variable optical attenuator 27 using the optical attenuation film 16 shown in Fig. 1, the optical attenuation film 16 is moved by a mechanical movement, and an optical signal, which is inputted from the optical fiber 15, is inputted to a designated position of the optical attenuation film 16. Therefore, there is a problem that the whole size of the variable optical attenuator 27 can not be made small, and high movement reliability can not be obtained, because the attenuating amount is controlled by the mechanical movement.

And at the variable optical attenuator 37 used the Mach-Zehnder interferometer structure shown in Fig. 2, the change of the refractive index of the thermo-optical phase shifter 19 is not so large by the change of temperature. Therefore, there is a problem that a dynamic range of the attenuating amount of the optical signal can not be made to wide.

It is therefore an object of the present invention to provide a variable optical attenuator and an optical add-drop multiplexing (ADM) repeater site used this variable optical attenuator and an optical power level adjusting method used this variable optical attenuator, whose reliability is high and dynamic range is wide.

According to a first aspect of the present invention, for achieving the object mentioned above, there is provided a variable optical attenuator. The variable optical attenuator provides an optical filter, which has a transmitting characteristic that has a transmitting region for transmitting light having designated wavelengths and attenuating regions in which the transmitting amount of the light becomes small gradually at the long wavelength side and the short wavelength side of said transmitting region, in which said transmitting characteristic changes by the change of temperature, and a temperature control means for controlling said temperature of said optical filter. And by setting said temperature of said optical filter so that a wavelength of an optical signal inputting to said optical filter is within either wavelength range of said attenuating regions of said optical filter, said optical signal transmitting through said optical filter is attenuated to a desiring optical power level.

According to a second aspect of the present invention, a variable optical attenuator provides an optical filter, which has a transmitting characteristic that has a transmitting region for transmitting light having designated wavelengths and attenuating regions in which the transmitting amount of the light becomes small gradually at the long wavelength side and the short wavelength side of said transmitting region, in which said transmitting characteristic changes by the change of temperature, an optical isolator provided between an optical fiber to which an optical signal is inputted and said optical filter, and a temperature control means for controlling said temperature of said optical filter. And by setting said temperature of said optical filter so that a wavelength of an optical signal inputting to said optical filter is within either wavelength range of said attenuating regions of said optical filter, said optical signal transmitting through said optical filter is attenuated to a desiring optical power level, and returned light reflected from said optical filter is absorbed or removed at said optical isolator.

According to a third aspect of present invention, said optical filter is disposed at an almost perpendicular face for the inputting direction of said optical signal.

According to a fourth aspect of the present invention, said optical filter includes a dielectric multi-layer film.

According to a fifth aspect of the present invention, said dielecric multi-layer film is made of materials in which said transmitting region and said attenuating regions are shifted to the long wavelength side or the short wavelength side when the temperature is changed.

According to a sixth aspect of the present invention, an optical add-drop multiplexing (ADM) repeater site provides a plurality of said variable optical attenuators defined in the first and second aspect, for a plurality of optical signals transmitting between wavelength division multiplexing (WDM) communication systems respectively, and optical power levels of said plurality of optical signals are adjusted to almost equal to a designated value by said variable optical attenuators.

According to a seventh aspect of the present invention, an optical power level adjusting method used a variable optical attenuator which provides an optical filter, which has a transmitting characteristic that has a transmitting region for transmitting light having designated wavelengths and attenuating regions in which the transmitting amount of light becomes small gradually at the long wavelength side and the short wavelength side of said transmitting region, in which said transmitting characteristic changes by the change of temperature, provides the steps of; setting said optical filter to a designated temperature, attenuating an optical power level of an optical signal inputting to said optical filter by using either of said attenuating regions of said optical filter to a designated value, and adjusting said optical power level of said optical signal.

According to a eighth aspect of the present invention, in the seventh aspect, said optical filter includes a dielectric multi-layer film.

According to a ninth aspect of the present invention, in the eighth aspect, said dielectric multi-layer film is made of materials in which said transmitting region and said attenuating regions are shifted to the long wavelength side or the short wavelength side when the temperature is changed.

The objects and features of the present invention will become more apparent from the consideration of the following detailed description taken in conjunction with the accompanying drawings in which:
Fig. 1 is a diagram showing a structure of a conventional variable optical attenuator used a mechanical method;
Fig. 2 is a diagram showing a structure of a conventional variable optical attenuator used a thermo-optical effect;
Fig. 3 is a block diagram showing a structure of a variable optical attenuator of an embodiment of the present invention;
Fig. 4 is a block diagram showing an optical ADM repeater site using the variable optical attenuators of the present invention; and
Fig. 5 is a graph showing a relation between a transmitting characteristic of a dielectric multi-layer film and an attenuating amount of an optical signal.

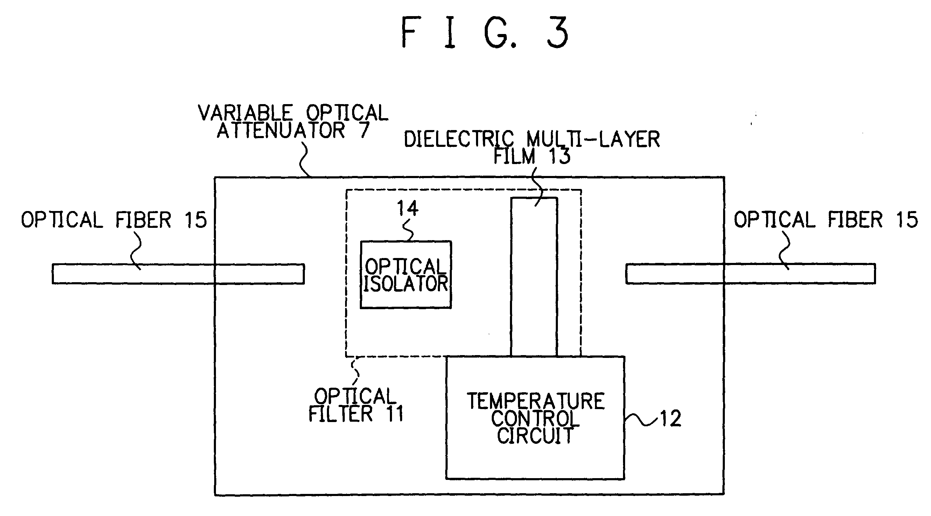

Referring now to the drawings, embodiments of the present invention is explained in detail. Fig. 3 is a block diagram showing a structure of a variable optical attenuator of the embodiment of the present invention. As shown in Fig. 3, the variable optical attenuator 7 consists of an optical filter 11 and a temperature control circuit 12. And the optical filter 11 provides a dielectric multi-layer film 13 and an optical isolator 14. The transmitting characteristic of light is changed by the change of temperature of the dielectric multi-layer film 13. The optical isolator 14 absorbs or removes returned light reflected from the dielectric multi-layer film 13. The temperature control circuit 12 controls the temperature of the dielectric multi-layer film 13. The variable optical attenuator 7 controls the transmitting characteristic of light of the dielectric multi-layer film 13 by using the temperature control circuit 12. And the variable optical attenuator 7 adjusts the power level of the optical signal of each wavelength transmitting between the WDM communication systems to a desiring level at attenuating regions in which the transmitting amount of the dielectric multi-layer film 13 becomes small gradually.

At the embodiment shown in Fig. 3, it is explained that the optical filter 11 provides the dielectric multi-layer film 13 and the optical isolator 14. However, it is possible that the optical isolator 14 is disposed alone and the optical filter 11 includes only the dielectric multi-layer film 13 as another embodiment.

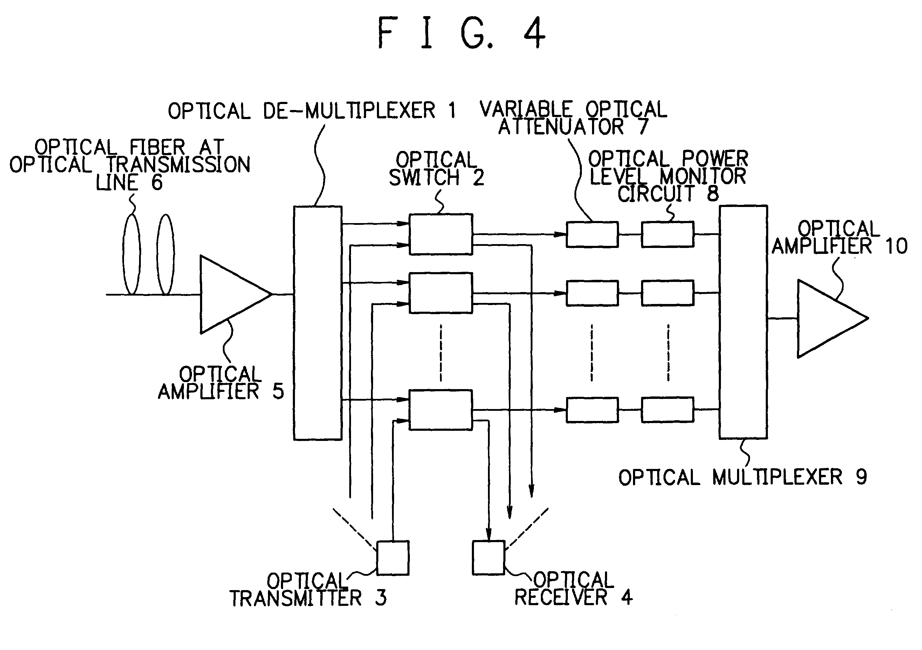

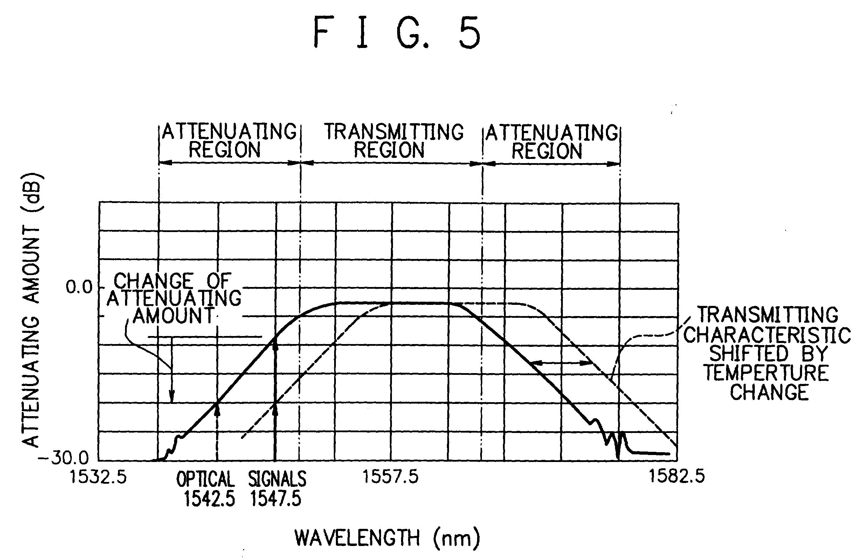

Referring to Figs. 4 and 5, the embodiment of the present invention is explained in more detail. Fig. 4 is a block diagram showing an optical ADM repeater site used the variable optical attenuators of the present invention. And Fig. 5 is a graph showing a relation between the transmitting characteristic of the dielectric multi-layer film and the attenuating amount of the optical signal.

Referring to Fig. 4, the optical ADM repeater site used the variable optical attenuators of the present invention is explained. The optical ADM repeater site consists of an optical de-multiplexer 1, optical switches 2, an optical transmitter 3, an optical receiver 4, an optical amplifier 5, variable optical attenuators 7, optical power level monitor circuits 8, an optical multiplexer 9, and an optical amplifier 10. An optical signal transmitted through an optical fiber at an optical transmission line 6 is amplified at the optical amplifier 5 and the amplified optical signal is inputted to the optical de-multiplexer 1. The optical de-multiplexer 1 has a function that splits a WDM signal into each wavelength. As the optical de-multiplexer 1, a device composed of an optical coupler and an optical filter, or an optical fiber grating, or an array waveguide grating (AWG) is used. In this embodiment, the AWG is used as the optical de-multiplexer 1.

The optical signals split into each wavelength at the optical de-multiplexer 1 are inputted to the optical switches 2. The optical switches 2 switches routes of the split optical signals whether the split optical signals are inputted to the optical receiver 4 or are inputted to the variable optical attenuators 7 where the split optical signals are attenuated. At this time, there is a case that new optical signals are added to the optical switches 2 from the optical transmitter 3 at the same time. Generally, deviation occurs in optical power levels of the optical signals passing through the optical switches 2 and the optical signals newly added from optical transmitter 3. This deviation is caused by a gain characteristic of the optical amplifier 5, a wavelength dependency of loss of the optical fiber at optical transmission line 6, and non- linearity of used devices.

In order to decrease the deviation of these power levels, it becomes necessary to adjust the power levels of each optical signal by using the variable optical attenuators 7 and the optical power level monitor circuits 8. The adjusting method of the optical power levels, which is a feature of the embodiment of the present invention, is explained in detail later. Each optical signal adjusted to a designated optical power level is multiplexed at the optical multiplexer 9 and the multiplexed signal is amplified at the optical amplifier 10 and outputted to a transmission line.

Referring to Fig. 3, the variable optical attenuator 7, which adjusts the inputted optical signal to a designated power level, is explained. As mentioned above, the variable optical attenuator 7 consists of the optical filter 11 and the temperature control circuit 12 that controls the temperature of the optical filter 11. And the optical filter 11 provides a filter being the dielectric multi-layer film 13 having a designated wavelength transmitting characteristic and the optical isolator 14. In this, the optical isolator 14 can be disposed separately from the optical filter 11, not included in the optical filter 11.

The optical signal inputted to the optical filter 11 is inputted to the dielectric multi-layer film 13 via the optical isolator 14. In order to decrease a polarization depending loss generating at the time when this inputted optical signal passes though the dielectric multi-layer film 13, the dielectric multi-layer film 13 is disposed almost perpendicular to the inputted optical signal. The optical signal inputted almost perpendicular to the dielectric multi-layer film 13 reflects at the side face of the dielectric multi-layer film 13. In order not to return the reflected light from the dielectric multi-layer film 13 to the optical fiber 15 of the input side, the optical isolator 14 is provided. The light returned to the optical isolator 14 reflected from the dielectric multi-layer film 13 is absorbed or led to the outside at the optical isolator 14.

Referring to Fig. 5, a method attenuating the optical signal at the dielectric multi-layer film 13 is explained. In Fig. 5, the wavelength is shown in the horizontal axis, and the transmitting rate, that is, the attenuating amount is shown in the vertical axis. For example, at the embodiment of the present invention, the dielectric multi-layer film 13 has a transmitting region (minimum loss region) though which light whose center wavelength is 1557.5 nm passes. And the dielectric multi-layer film 13 has regions where the transmitting amounts become gradually small at the short wave side (left side of the graph) and the long wave side (right side of the graph).

In case that the wavelength of the optical signal is 1547.5 nm shown in an arrow mark of continuous line, the transmitting characteristic of the dielectric multi-layer film 13 is at the position where a few wavelength is moved to the short wave side from the transmitting region (minimum loss region), therefore the optical signal is attenuated by about 8 dB. And in case that the wavelength of the optical signal is 1542.5 nm shown in an arrow mark of broken line, the optical signal is attenuated by about 20 dB.

As explained above, by making the wavelength of the optical signal position at the attenuating regions that reach to the maximum loss of the long wave side or the short wave side from the transmitting region (minimum loss region), the optical signal can be attenuated in a wide dynamic range. And the optical filter 11 uses the dielectric multi-layer film 13, therefore, when the temperature of the dielectric multi-layer film 13 is changed, the transmitting region (minimum loss region) is shifted to the short wave side or the long wave side, with almost keeping the profile of the wavelength characteristic.

By using this shift of the minimum loss region, the variable optical attenuator 7 can achieve its attenuation. That is, the dielectric multi-layer film 13 having the wavelength transmitting characteristic, in which the wavelength of the optical signal is in the attenuating region, is provided beforehand at each of the variable optical attenuators 7. And referring to the information from the optical power level monitor circuit 8, the temperature of the dielectric multi-layer film 13 is made to change by using the temperature control circuits 12. With this operation, the transmitting characteristic of the dielectric multi-layer film 13 is shifted to the horizontal direction of Fig. 5, and the attenuating amount of the optical signal can be adjusted.

Generally, in case that the dielectric multi-layer film 13 is used, the minimum loss peak wavelength becomes short corresponding to the rise of the temperature. And the transmitting characteristic shifts to the short wavelength side with keeping the profile almost the same, this means that the attenuating region of the optical signal is relatively shifted to the long wavelength side. On the contrary, in case that the transmitting characteristic shifts to the long wavelength side, the attenuating region of the optical signal is relatively shifted to the short wavelength side. This shift is shown in Fig. 5, that is, the continuous line of the transmitting characteristic is shifted to the broken line of the transmitting characteristic.

That is, in case that the wavelength of the optical signal is 1547.5 nm, when the transmitting characteristic shifts to the right side broken line, the attenuating amount of the optical signal increases from about 8 dB to about 20 dB. With this shift, the attenuating amount of the optical signal inputted to the optical filter 11 can be adjusted to a desiring value. By applying this operation to the optical signals of each wavelength de-mutiplexed at the optical de-multiplexer 1, the optical power levels of each wavelength can be made to almost equivalent levels.

As mentioned above, at the variable optical attenuator 7 of the embodiment of the present invention, the attenuating amount of the inputted optical signal is adjusted by utilizing either side of the attenuating regions of the dielectric multi-layer film 13, therefore, a wide dynamic range more than 30 dB can be achieved. And by shifting the transmitting characteristic of the dielectric multi-layer film 13 by the change of the temperature, the wavelength of the optical signal can be made to correspond to an arbitrary position of either side of the attenuating regions, with this, the attenuating amount of the optical signal can be easily adjusted.

And the variable optical attenuator 7 at the embodiment of the present invention does not use a mechanical movement, and adjusts the attenuating amount of the optical signal by controlling the temperature control circuit 12 electrically with referring to a signal from the optical power level monitor circuit 8. Consequently, the deterioration of the reliability caused by mechanical movements can be avoided.

As explained above, at the optical ADM repeater site using for the WDM communication system, the variable optical attenuator of the present invention can adjust each optical power level of optical signals, which pass through optical switches and are added from the optical transmitter, inputted with different optical power levels, in high reliability, and can make each of the optical power levels almost equivalent to a designated optical power level in a wide dynamic range.

Because, the variable optical attenuator of the present invention utilizes the attenuating region of the short wavelength side or the long wavelength side of the minimum loss region of the dielectric multi-layer film, and adjusts the attenuating amounts of the passing through optical signals and the added signals by shifting the attenuating region used the change of the temperature. And the variable optical attenuator, without using a mechanical movement mechanism, adjusts the attenuating amounts of the optical signals by only an electric control by referring to the information, of the optical power levels of the optical signals passing through and newly added in the optical ADM repeater site, inputted from the optical power level monitor circuit.

While the present invention has been described with reference to the particular illustrative embodiments, it is not to be restricted by those embodiments but only by the appended claims. It is to be appreciated that those skilled in the art can change or modify the embodiments without departing from the scope and spirit of the present invention.

## Claims

1. A variable optical attenuator, comprising:
an optical filter, which has a transmitting characteristic that has a transmitting region for transmitting light having designated wavelengths and attenuating regions in which the transmitting amount of the light becomes small gradually at the long wavelength side and the short wavelength side of said transmitting region, in which said transmitting characteristic changes by the change of temperature; and
a temperature control means for controlling said temperature of said optical filter,
wherein: by setting said temperature of said optical filter so that a wavelength of an optical signal inputting to said optical filter is within either wavelength range of said attenuating regions of said optical filter, said optical signal transmitting through said optical filter is attenuated to a desiring optical power level.

2. A variable optical attenuator, comprising:
an optical filter, which has a transmitting characteristic that has a transmitting region for transmitting light having designated wavelengths and attenuating regions in which the transmitting amount of the light becomes small gradually at the long wavelength side and the short wavelength side of said transmitting region, in which said transmitting characteristic changes by the change of temperature;
an optical isolator provided between an optical fiber to which an optical signal is inputted and said optical filter; and
a temperature control means for controlling said temperature of said optical filter,
wherein: by setting said temperature of said optical filter so that a wavelength of an optical signal inputting to said optical filter is within either wavelength range of said attenuating regions of said optical filter, said optical signal transmitting through said optical filter is attenuated to a desiring optical power level, and
returned light reflected from said optical filter is absorbed or removed at said optical isolator.

3. A variable optical attenuator in accordance with claim 1, or 2, wherein:
said optical filter is disposed at an almost perpendicular face for the inputting direction of said optical signal.

4. A variable optical attenuator in accordance with claim 1, 2, or 3, wherein:
said optical filter includes a dielectric multi-layer film.

5. A variable optical attenuator in accordance with claim 4, wherein:
said dielectric multi-layer film is made of materials in which said transmitting region and said attenuating regions are shifted to the long wavelength side or the short wavelength side when the temperature is changed.

6. An optical add-drop multiplexing (ADM) repeater site, comprising:
a plurality of said variable optical attenuators defined in claim 1, 2, 3, 4 or 5, for a plurality of optical signals transmitting between wavelength division multiplexing (WDM) communication systems respectively,
wherein: optical power levels of said plurality of optical signals are adjusted to almost equal to a designated value by said variable optical attenuators.

7. An optical power level adjusting method used a variable optical attenuator which provides an optical filter, which has a transmitting characteristic that has a transmitting region for transmitting light having designated wavelengths and attenuating regions in which the transmitting amount of light becomes small gradually at the long wavelength side and the short wavelength side of said transmitting region, in which said transmitting characteristic changes by the change of temperature, comprising the steps of:
setting said optical filter to a designated temperature;
attenuating an optical power level of an optical signal inputting to said optical filter by using either of said attenuating regions of said optical filter to a designated value; and
adjusting said optical power level of said optical signal.

8. An optical power level adjusting method in accordance with claim 7 wherein:
said optical filter includes a dielectric multi-layer film.

9. An optical power level adjusting method in accordance with claim 8 wherein:
said dielectric multi-layer film is made of materials in which said transmitting region and said attenuating regions are shifted to the long wavelength side or the short wavelength side when the temperature is changed.
